# EUROPÄISCHE PATENTANMELDUNG

(11) **EP 4 793 571 A2**
(43) Veröffentlichungstag der Anmeldung: **19.08.2026**
(21) Anmeldenummer: 26158683.8
(22) Anmeldetag: 16.02.2026
(51) Int. Cl.: F24S 10/50, H02S 40/44, F24S 80/30, F28F 9/02

(54) **WÄRMEÜBERTRAGER FÜR EIN PHOTOVOLTAIK-MODUL ODER/UND EINEN THERMISCHEN, INSBESONDERE PHOTOVOLTAISCH-THERMISCHEN, SOLARKOLLEKTOR**

(30) Priorität: 17.02.2025 LU 509871
(71) Anmelder: Broß, Nicholas, 66299 Friedrichsthal (DE)
(72) Erfinder: Theis, Danjana, 66125 Saarbrücken (DE); Broß, Nicholas, 66299 Friedrichsthal (DE)
(74) Vertreter: Patentanwälte Bernhardt / Wolff Partnerschaft mbB

(57) **Zusammenfassung**

Die Erfindung betrifft einen Wärmeübertrager für ein Photovoltaik-Modul oder/und einen thermischen, insbesondere photovoltaisch-thermischen, Solarkollektor, der Kanäle (3) zur Aufnahme von Wärmeträgerfluid und einen Einlass (4) und einen Auslass (6) für das Wärmeträgerfluid aufweist, wobei der Wärmeträgerfluideinlass (4) und der Wärmeträgerfluidauslass (6) durch die Kanäle (3) miteinander verbunden sind und die Kanäle (3) in jeweilig unterschiedlichen Abständen von dem Einlass (4) oder/und dem Auslass (6) angeordnet sind. Erfindungsgemäß sind die Kanäle (3) derart ausgebildet, dass bei Durchfluss des Wärmeträgerfluids durch die Kanäle (3) unterschiedliche große Druckverluste auftreten.

## Beschreibung

Die Erfindung betrifft einen Wärmeübertrager für ein Photovoltaik-Modul oder/und einen thermischen, insbesondere photovoltaisch-thermischen, Solarkollektor, der Kanäle zur Aufnahme von Wärmeträgerfluid und einen Einlass und einen Auslass für das Wärmeträgerfluid aufweist, wobei der Wärmeträgerfluideinlass und der Wärmeträgerfluidauslass durch die Kanäle miteinander verbunden sind und die Kanäle in jeweilig unterschiedlichen Abständen von dem Einlass oder/und dem Auslass angeordnet sind.

Durch Benutzung sind Wärmeübertrager bekannt, die als serielle Wärmequelle für Wärmepumpen eingesetzt werden und als Ersatz oder Ergänzung für andere Wärmequellen wie Erdreichkollektoren oder Erdsonden dienen. Problematisch ist, dass in den bekannten Wärmeübertragern ein derart großer Druckverlust erfolgt, dass eine hydraulische Reihenschaltung mehrerer der Wärmeübertrager nicht praktikabel ist.

Der Erfindung liegt die Aufgabe zugrunde, einen Wärmeübertrager zu schaffen, der einen geringen Druckverlust aufweist und homogen durchströmt wird.

Erfindungsgemäß wird diese Aufgabe dadurch gelöst, dass die Kanäle derart ausgebildet sind, dass bei Durchfluss des Wärmeträgerfluids durch die Kanäle unterschiedliche große Druckverluste auftreten.

Die Ausbildung der Kanäle mit unterschiedlich großen Druckverlusten ermöglicht eine homogene Durchströmung des Wärmeübertragers. Diese führt darüber hinaus zu einem geringen Gesamtdruckverlust. Dank der homogenen Durchströmung des Wärmeübertragers mit dem Wärmeträgerfluid wird ein besonders großer thermischer Wirkungsgrad erreicht.

Vorteilhaft können Photovoltaik-Zellen und/oder zumindest ein Photovoltaik-Modul, vorzugsweise dessen Photovoltaik-Zellen, insbesondere des photovoltaisch-thermischen Solarkollektors ("PVT-Kollektor"), homogener gekühlt werden und damit der Betrag einer elektrischen Leistungssteigerung infolge der Kühlung vergrößert werden.

Mehrere derartige Wärmeübertrager können in Reihe miteinander verbunden werden, insbesondere bei Nutzung von zwei oder mehreren der Wärmeübertrager ggf. für zwei oder mehrere Photovoltaik-Module.

In einer Ausgestaltung der Erfindung sind die Kanäle derart ausgebildet, dass die Größe des Druckverlusts vom Abstand des jeweiligen Kanals von dem Wärmeträgerfluideinlass und/oder von dem Wärmeträgerfluidauslass abhängig ist.

Zweckmäßigerweise ist für jeden der Kanäle ein Kanaleinlass vorgesehen und die Abstände der Kanaleinlässe von dem Wärmeträgerfluideinlass unterscheiden sich voneinander und/oder es ist für jeden der Kanäle ein Kanalauslass vorgesehen und die Abstände der Kanalauslässe unterscheiden sich von dem Wärmeträgerfluidauslass voneinander. Vorzugsweise ist bzw. sind der jeweilige Kanaleinlass oder/und der jeweilige Kanalauslass durch das Ende zumindest einer den Kanal bildenden Kanalwand gebildet.

In einer Ausführungsform der Erfindung sind die Kanäle derart ausgebildet, dass der Druckverlust, der zwischen dem Wärmeträgerfluideinlass und dem Wärmeträgerfluidauslass auftritt, bei Durchfluss des Wärmeträgerfluids durch jeden der Kanäle gleich groß ist und/oder sich die Druckverluste, die zwischen dem Wärmeträgerfluideinlass und dem Wärmeträgerfluidauslass auftreten, von Kanal zu Kanal um höchstens 10 %, vorzugsweise um höchstens 5 %, voneinander unterscheiden.

Zweckmäßigerweise sind die Kanäle derart ausgebildet, dass die Größe des Druckverlusts eines der Kanäle, der in einem größeren Abstand von dem Wärmeträgerfluideinlass angeordnet ist, kleiner als der Druckverlust eines anderen der Kanäle ist, der in einem geringeren Abstand von dem Wärmeträgerfluideinlass angeordnet ist.

Alternativ oder ergänzend dazu können die Kanäle derart ausgebildet sein, dass die Größe des Druckverlusts eines der Kanäle, der in einem größeren Abstand von dem Wärmeträgerfluidauslass angeordnet ist, kleiner als der Druckverlust eines anderen der Kanäle ist, der in einem geringeren Abstand von dem Wärmeträgerfluidauslass angeordnet ist.

In einer weiteren Ausgestaltung der Erfindung unterscheiden sich die Kanäle in der Größe ihrer, insbesondere mittleren, Querschnitte, um die unterschiedlich großen Druckverluste vorzusehen.

Ergänzend oder alternativ dazu ist zumindest einer der Kanäle, vorzugsweise sind mehrere der Kanäle, mit zumindest einem Mittel zur Beeinflussung des Strömungswiderstands des Kanals bzw. der Kanäle, vorzugsweise einer Blende oder einem Ventil, versehen.

In einer Ausgestaltung der Erfindung ist die Größe der Querschnittsfläche der Kanaleinlässe vom Abstand des jeweiligen Kanaleinlasses von dem Wärmeträgerfluideinlass und/oder die Größe der Querschnittsfläche der Kanalauslässe vom Abstand des jeweiligen Kanalauslasses von dem Wärmeträgerfluidauslass abhängig.

In einer besonders bevorzugten Ausführungsform der Erfindung ist die Querschnittsfläche eines der Kanaleinlässe, der in einem größeren Abstand von dem Wärmeträgerfluideinlass angeordnet ist, größer als die Querschnittsfläche eines anderen der Kanaleinlässe, der in einem geringeren Abstand von dem Wärmeträgerfluideinlass angeordnet ist, und/oder die Querschnittsfläche eines der Kanalauslässe, der in einem größeren Abstand von dem Wärmeträgerfluidauslass angeordnet ist, größer als die Querschnittsfläche eines anderen der Kanalauslässe, der in einem geringeren Abstand von dem Wärmeträgerfluidauslass angeordnet ist.

Zweckmäßigerweise ist zwischen dem Wärmeträgerfluideinlass und den Kanaleinlässen eine Zuführleitung und/oder zwischen dem Wärmeträgerfluidauslass und den Kanalauslässen eine Abführleitung angeordnet. Die Zuführleitung dient vorzugsweise zur Verteilung des Wärmeträgerfluids in die Kanäle. Mittels der Abführleitung kann das Wärmeträgerfluid von den Kanälen zu dem Wärmeträgerfluidauslass transportiert werden.

In einer Ausgestaltung der Erfindung sind die Kanäle zumindest abschnittsweise parallel zueinander angeordnet, vorzugsweise über zumindest 70 %, besonders bevorzugt über zumindest 90 %, ihrer Länge.

Zweckmäßigerweise sind die Kanäle zumindest abschnittsweise geradlinig, vorzugsweise über zumindest 70 %, besonders bevorzugt über zumindest 90 %, ihrer Länge.

In einer Ausführungsform der Erfindung sind die Kanäle durch zumindest abschnittsweise geradlinige Kanalwände voneinander getrennt, vorzugsweise über zumindest 70 %, besonders bevorzugt über zumindest 90 %, ihrer Länge.

Während es vorstellbar wäre, zur Bildung der Kanalein- und/oder -auslässe gesonderte Bauelemente, bspw. Wandungsteile oder dgl., vorzusehen, ist in einer besonders bevorzugten Ausgestaltung der Erfindung zur Bildung des jeweiligen Kanalein- und/oder -auslasses an zumindest einem der Enden zumindest einer der jeweiligen Kanalwände eine Kanalwandaufweitung vorgesehen. Zweckmäßigerweise ist die Kanalwandaufweitung bzw. sind die Kanalwandaufweitungen unmittelbar am Ende der jeweiligen Kanalwand bzw. Kanalwände gebildet. Vorzugsweise ist das zumindest eine Ende der Kanalwand durch die Kanalwandaufweitung aufgeweitet.

Die Kanalwandaufweitung ist zweckmäßigerweise hammerkopfartig geformt oder/und T-förmig.

Vorzugsweise sind Außenkanten der Kanalwandaufweitung, ggf. deren Löt- oder Schweißnähte, abgerundet. Dadurch wird die Druckfestigkeit des Wärmeübertragers verbessert. Insbesondere werden mechanische Kerbspannungen in der Löt- oder Schweißverbindung verringert, insbesondere auch lokale Maximalkerbspannungen reduziert.

In einer Ausgestaltung der Erfindung weist der Wärmeübertrager zumindest ein erstes, insbesondere ebenes, Bauteil auf, das vorzugsweise zur, ggf. unmittelbaren, Anordnung an dem Photovoltaik-Modul vorgesehen ist.

Zweckmäßigerweise weist der Wärmeübertrager ferner ein zweites Bauteil auf, das vorzugsweise eine von dem Photovoltaik-Modul abgewandte Seite des Wärmeübertragers bildet.

Das erste und/oder das zweite Bauteil weisen zweckmäßigerweise eine Platte, vorzugsweise ein Blech, auf. Das erste und/oder das zweite Bauteil können parallel zueinander angeordnet sein. Das Blech ist vorzugsweise zu seiner Verbindung durch Schweißen oder Löten geeignet.

In einer Ausführungsform der Erfindung weist der Wärmeübertrager eine umlaufende Seitenwandung auf, welche einen Bereich zur Aufnahme des Wärmeträgerfluids umschließt.

Die Kanalwände und die Seitenwandung sind durch zwischen den Bauteilen angeordnete und mit den Bauteilen verbundene Wandbauelemente gebildet, die vorzugsweise, ggf. metallische, Stabelemente oder Leisten umfassen. In einer Ausführungsform der Erfindung sind die Wandbauelemente und ggf. weitere Teile des Wärmeübertragers an das erste und/oder das zweite Bauteil angefügt, z.B. durch Kleben, Löten oder Schweißen.

In einer weiteren Ausgestaltung der Erfindung sind die die Kanäle, die Zuführleitungen, die Kanalwände und/oder die Kanalwandaufweitung in das erste und/oder das zweite Bauteil eingeformt. In der bevorzugten Ausführungsform der Erfindung sind die Kanäle und ggf. die Zuführleitungen und/oder die Kanalwände, insbesondere auch die Kanalwandaufweitungen, in dem Blech tiefgezogen. Es könnte alternativ oder ergänzend mit anderen Verfahren umgeformt werden, bspw. durch Streckziehen, Walzen, Roboforming und/oder Hydroforming.

Zweckmäßigerweise ist der Wärmeträgerfluideinlass und/oder der Wärmeträgerfluidauslass durch eine in dem zweiten Bauteil vorgesehene Ausnehmung gebildet. Der Wärmeträgerfluideinlass und/oder der Wärmeträgerfluidauslass kann einen Stutzen zur Anordnung einer Leitung umfassen.

In einer Ausgestaltung der Erfindung ist der Wärmeübertrager, insbesondere das erste Bauteil, unmittelbar an das Photovoltaik-Modul angelegt und/oder mit dem Photovoltaik-Modul verbunden, bspw. durch eine Klebung. Alternativ könnte zwischen dem Wärmeübertrager und dem Photovoltaik-Modul ein Mittel zur Verbesserung, insbesondere Homogenisierung, der Wärmübertragung, vorzugsweise eine Wärmeleitmatte, angeordnet sein.

In einer Weiterbildung der Erfindung könnte das Photovoltaik-Modul unmittelbar auf dem Wärmeübertrager, insbesondere dem ersten Bauteil, gebildet werden, vorzugsweise indem es direkt darauf laminiert wird.

In einer Ausführungsform der Erfindung ist der Wärmeübertrager, insbesondere das zweite Bauteil, mit einer Einrichtung zur Vergrößerung seiner Oberfläche zum Wärmeaustausch mit der Umwelt versehen, vorzugsweise mit Rippen oder/und Lamellen zur Wärmeaufnahme oder/und -abgabe. Die Rippen oder/und Lamellen sind zweckmäßigerweise an einer Rückseite des zweiten Bauteils angeordnet, die von dem ersten Bauteil abgewandt ist. Die Rippen oder/und Lamellen könnten ergänzend oder alternativ auch an einer Außenseite der Seitenwandung angeordnet sein.

In einer Ausführungsform der Erfindung ist der Wärmeübertrager Teil einer Bausgruppe zur Nachrüstung eines Photovoltaik-Moduls oder/und eines thermischen, insbesondere photovoltaisch-thermischen, Solarkollektors.

In einer weiteren Ausgestaltung der Erfindung ist der erfindungsgemäße Wärmeübertrager Teil eines Photovoltaik-Moduls oder/und eines thermischen Solarkollektors, insbesondere photovoltaisch-thermischen, Solarkollektors.

Eine Weiterbildung der Erfindung betrifft eine Einrichtung zur Befestigung eines Wärmeübertragers an einem Photovoltaik-Modul. Die Befestigungseinrichtung eignet sich zur Befestigung des eingangs genannten Wärmeübertragers, kann aber auch zur Befestigung anders aufgebauter Wärmeübertrager benutzt werden.

Die Befestigungseinrichtung umfasst zweckmäßigerweise zumindest ein Mittel zum Halten und/oder Verklemmen des Wärmeübertragers an einem bzw. gegen einen Befestigungsrahmen des Photovoltaik-Moduls. In einer Ausführungsform der Erfindung ist das Mittel zum Halten und/oder Verklemmen dazu eingerichtet, den Wärmeübertrager und das Photovoltaik-Modul aneinander zu halten. Der Befestigungsrahmen ist vorzugsweise Teil der Befestigungseinrichtung. Der Befestigungsrahmen ist vorzugsweise an einem Rand, besonders bevorzugt entlang eines äußeren Rands, des Photovoltaik-Moduls angeordnet und kann den äußeren Rand abschnittsweise oder vollständig umgreifen. Derartige Befestigungsrahmen sind üblicherweise, insbesondere bereits vorinstalliert, an Photovoltaik-Modulen vorgesehen und dienen der mechanischen Stabilität der Photovoltaik-Module und zur Installation der Photovoltaik-Module bzw. der PVT-Kollektoren an Tragkonstruktionen, die Ständer o. dgl. umfassen können. Sie können aber auch Teil einer Baugruppe zur Nachrüstung eines Photovoltaik-Moduls oder/und eines thermischen Solarkollektors, vorzugsweise photovoltaisch-thermischen Solarkollektors, sein.

In einer Ausgestaltung der Erfindung ist die Befestigungseinrichtung zur Verklemmung des Wärmeübertragers an dem Photovoltaik-Modul eingerichtet. Sie weist dazu vorzugsweise ein Mittel zum Verklemmen des Wärmeübertragers gegen den Befestigungsrahmen und/oder das Photovoltaik-Modul bzw. den Solarkollektor auf. In einer Ausführungsform der Erfindung umfasst das Verklemmungsmittel zumindest einen Klemmblock, vorzugsweise zumindest zwei Klemmblöcke, der zur formschlüssigen Anordnung zwischen einer Innenseite des Befestigungsrahmens und einem Rand des Wärmeübertragers vorgesehen ist. Besonders bevorzugt ist der Klemmblock zur Anordnung an einer Ecke des Befestigungsrahmens und des Wärmeübertragerrands eingerichtet. Zweckmäßigerweise sind die Klemmblöcke auf der Seite, die in einer Klemmposition dem Photovoltaik-Modul bzw. dem Solarkollektor zugewandt ist, mit einer Ausnehmung versehern, welche zusammen mit der Photovoltaik-Modul-Rückseite bzw. der Solarkollektor-Rückseite eine Nut bildet, in die der Wärmeübertrager eingesetzt werden kann. Zur besonders einfachen Montage kann der Klemmblock keilförmig gebildet sein. Eine beim Einsatz in den Befestigungsrahmen zusammen mit dem Photovoltaik-Modul bzw. dem Solarkollektor gebildete Nut wird dann zur Erleichterung des Einsatzes des Wärmeübertragers nach innen hin breiter.

Alternativ oder ergänzend dazu ist das Verklemmungsmittel dazu eingerichtet, den genannten Stutzen des Wärmeüberträgerfluideinlasses oder des Wärmeüberträgerfluidauslasses gegen den Befestigungsrahmen zu verklemmen. Das Verklemmungsmittel kann den Stutzen dazu umgreifen und ggf. eine Schelle bilden. Zweckmäßigerweise ist das Verklemmungsmittel derart vorgesehen, dass es in eine zwischen dem Befestigungsrahmen und dem Wärmeübertrager gebildete Nut eingesetzt werden kann.

Die Verklemmungsmittel ist zweckmäßigerweise aus einem wetterbeständigen und auch unter Temperaturschwankungen maßhaltigen Material, beispielsweise Metall oder Kunststoff, gebildet. Die Größe und Formung des Verklemmungsmittels ist zweckmäßigerweise derart an die Form des Wärmeübertragers und des Befestigungsrahmens angepasst, dass sie formschlüssig und klemmend aneinander angeordnet werden können.

Dadurch wird es möglich, den Wärmeübertrager passend und stabil im Verhältnis zu Positionen von Anschlussdosen und Bypass-Dioden des Photovoltaik-Moduls anzuordnen. Schäden am Photovoltaik-Modul durch Verrutschen des Wärmeübertragers aufgrund seines Eigengewichts oder durch andere mechanische Belastungen werden vermieden.

Das Verklemmungsmittel kann mittels Fräsen oder durch Gussverfahren, bspw. durch Spritzguss, hergestellt sein.

Zur Montage werden zunächst an einer Seite des Photovoltaik-Moduls, an der ein Stutzen des Wärmeübertragers angeordnet, zwei der Klemmblöcke so in den Befestigungsrahmen des Photovoltaik-Moduls eingesetzt, dass sie formschlüssig in den Ecken des Befestigungsrahmens sitzen und anschließend der Wärmeübertrager eingesetzt. Auf der den Klemmblöcken gegenüberliegenden Seite des Photovoltaik-Moduls wird anschließend das den Stutzen umgreifende Klemmmittel in den Rahmen eingesetzt und an dem Stutzen befestigt.

Gemäß einer weiteren Ausführungsform der Erfindung weist die Befestigungseinrichtung zumindest eine Feder auf, mittels welcher der Wärmeübertrager gegen den Befestigungsrahmen und/oder gegen das Photovoltaik-Modul verspannbar und/oder verklemmbar ist.

Die Erfindung wird nachfolgend anhand von Ausführungsbeispielen und der beiliegenden Zeichnung, die sich auf die Ausführungsbeispiele beziehen, näher erläutert. Es zeigen:
- Fig. 1: ein Bauteil eines erfindungsgemäßen Wärmeübertragers in Draufsicht und in isometrischer Darstellung,
- Fig. 2: einen Ausschnitt des Wärmeübertragers nach Fig. 1,
- Fig. 3: einen Wärmeübertrager mit einem Bauteil nach Fig. 1 in isometrischer Darstellung, montiert an einem Photovoltaik-Modul,
- Fig. 4: Bauteile eines weiteren erfindungsgemäßen Wärmeübertragers in isometrischer Darstellung,
- Fig. 5: einen Wärmeübertrager mit den Bauteilen nach Fig. 4 in isometrischer Darstellung,
- Fig. 6: den Wärmeübertrager nach Fig. 5 im Schnitt,
- Fig. 7: Bauteile eines weiteren erfindungsgemäßen Wärmeübertragers in isometrischer Darstellung, und
- Fig. 8 bis 12: weitere erfindungsgemäße Wärmeübertrager.

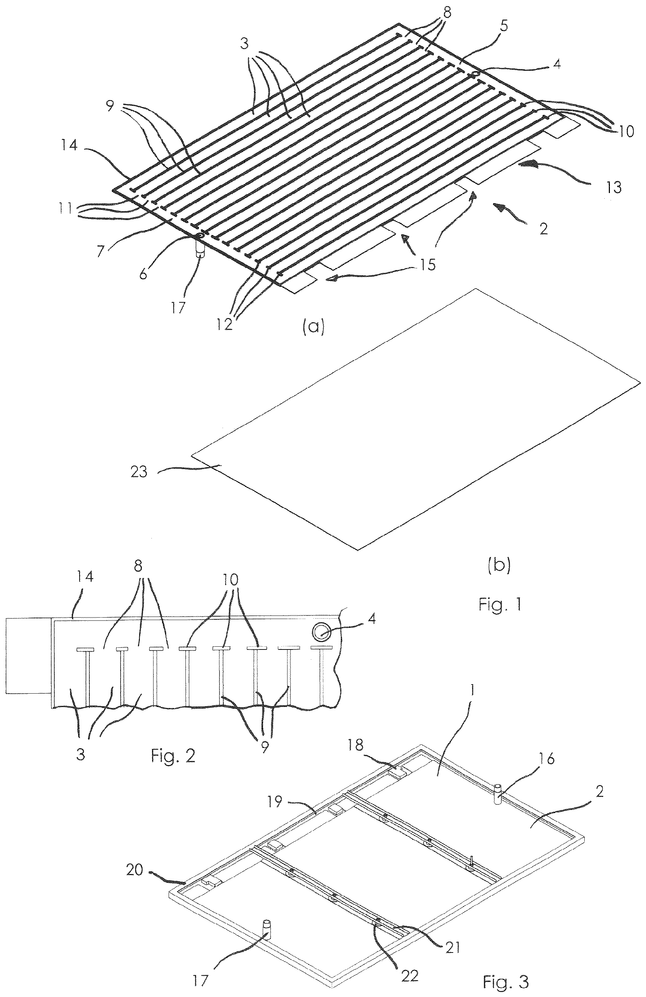

In Fig. 1a) ist ein erstes Bauteil 2 eines erfindungsgemäßen Wärmeübertragers 1 gezeigt, das eine erste Platte umfasst, auf der nebeneinander mehrere Kanäle 3 vorgesehen sind. Die Kanäle 3 sind durch Kanalwände 9 voneinander getrennt, die durch Stabelemente gebildet sein können, die auf die erste Platte gefügt sind. Im vorliegenden Ausführungsbeispiel sind die Kanalwände 9 geradlinig und parallel zueinander angeordnet. Die erste Platte kann durch ein, bevorzugt ebenes, Blech, insbesondere ein Metallblech, gebildet sein. Die Stabelemente sind vorzugsweise ebenfalls metallisch und können an das Blech angeschweißt sein.

Es versteht sich, dass die erste Platte und die Kanalwände 9 alternativ auch durch ein anderes Material, beispielsweise Kunststoff, Glas oder Keramik gebildet sein könnten und in anderer Weise aneinandergefügt sein könnten, beispielsweise durch eine Klebung.

In der ersten Platte ist eine Aussparung vorgesehen, die einen Einlass 4 für einen Wärmeträgerfluid bildet. Wie in Fig. 3 zu sehen ist, die den Wärmeübertrager 1 montiert an einem Photovoltaik-Modul 19 zeigt, kann auf der Rückseite des Wärmeträgerfluideinlasses 4 ein Anschlussstutzen 16 angeordnet sein, um den Wärmeübertrager 1 über eine Verbindungsleitung mit anderen Geräten zu verbinden. Ausgehend von dem Wärmeträgerfluideinlass 4 ist eine Zuführleitung 5 gebildet, über welche ein Wärmeträgerfluid zu den Kanälen 3 fließen kann. Für jeden der Kanäle 3 ist ein Kanaleinlass 8 vorgesehen, dessen jeweilige Größe durch Kanalwandaufweitungen 10 bestimmt ist, die an den Enden der jeweiligen Kanalwände 9 gebildet sind. Im vorliegenden Beispiel sind die Kanalwandaufweitungen 10 durch vergleichsweise kurze Stäbe gebildet, die jeweils am Ende der Kanalwände 9 bündig anschließend und senkrecht dazu angeordnet sind, sodass das Ende der Kanalwände 9 eine Form nach Art eines T-Stücks aufweist.

Auf der Seite des Wärmeübertragers 1, der von der Seite abgewandt ist, der den Wärmeüberträgerfluideinlass 4 bildet, ist ein Wärmeüberträgerfluidauslass 6 vorgesehen, der ebenfalls durch eine Ausnehmung in der ersten Platte gebildet ist und an dessen Rückseite ein Auslassstutzen 17 gebildet sein kann. Von Kanalauslässen 11 führt zu dem Wärmeüberträgerfluidauslass 6 eine Abführleitung 7. Auch die Größe der Kanalauslässe 11 kann jeweils durch Kanalwandaufweitungen 12 bestimmt sein, die ebenfalls durch vergleichsweise kurze Stabelemente gebildet sein können. Auf der ersten Platte ist ferner eine umlaufende Außenwandung 14 vorgesehen, die dieselbe Höhe aufweist wie die Kanalwände 9 und die Kanalwandaufweitungen 10,12. In einem Bereich 13 der ersten Platte, der außerhalb der Außenwandung 14 liegt, können Aussparungen 15 zur Aufnahme von Anschlussdosen 18 des PV-Moduls 19 vorgesehen sein.

Der Wärmeübertrager 1 umfasst eine in Fig. 1b) gezeigte zweite Platte 23, die ein zweites Bauteil des Wärmeübertragers 1 bildet und, z.B. durch Schweißung oder Klebung, an den Kanalwänden 9, den Kanalwandaufweitungen 10,12 und der Außenwandung 14 befestigt ist, sodass zur Aufnahme des Wärmeträgerfluids ein Raum gebildet ist, der abgesehen von Wärmeträgerfluideinlass 4 und dem Wärmeüberträgerfluidauslass 6 geschlossen ist. Die Platte 23 ist zumindest mit der Außenwandung 14, ggf. auch mit den weiteren genannten Bauteilen, dichtend verbunden.

Es versteht sich, dass abweichend von dem vorliegenden Beispiel die Kanalwände und die Außenwandung jeweilig an einer der beiden Platten und der Wärmeüberträgerfluideinlass 4 sowie der Wärmeüberträgerfluidauslass 6 an der jeweilig anderen Platte angeordnet sein können.

Wie insbesondere Fig. 2 zu entnehmen ist, sind die Abstände der Kanalwandaufweitungen 10 der Kanaleinlässe 8 unterschiedlich groß. Sie werden zu den Längsseiten des Wärmeübertragers 1 hin größer. Um unterschiedliche Druckverluste auszugleichen, die sich aufgrund der unterschiedlichen Abstände der Kanaleinlässe 8 von dem Wärmeträgerfluideinlass 4 ergeben, werden die die Kanaleinlässe 8 immer größer und/oder die Abstände der Kanalwandaufweitungen 10 voneinander immer größer, je größer der Abstand der Kanaleinlässe 8 von dem Wärmeträgerfluideinlass 4 ist. In gleicher Weise sind auch die Kanalauslässe 11 immer größer und/oder die Abstände der Kanalwandaufweitungen 12 voneinander immer größer, je weiter die Kanalauslässe 11 von dem Fluidauslass 6 entfernt sind.

Dadurch wird erreicht, dass der Wärmeübertrager 1 durch das Wärmeüberträgerfluid besonders homogen durchströmt wird und dabei der Druckverlust des Wärmeübertragers 1 zwischen dem Fluideinlass 4 und dem Fluidauslass 6 besonders gering ist.

In Fig. 3 ist dargestellt, wie der Wärmeübertrager 1 mit weiteren Bauteilen verbunden sein kann. In Fig. 3 ist die Rückseite der ersten Platte sichtbar, auf deren Vorderseite die Kanalwände 9 angeordnet sind. Auf die Vorderseite des in Fig. 1 gezeigten ersten Bauteils 2 ist ein Photovoltaik-Modul 19 derart bündig aufgesetzt, dass die Außenwandung 14 sowie die Kanalwände 9 samt der Kanalwandaufweitungen 10,12 bündig und dichtend an dem Photovoltaik-Modul 19 anliegen. Das erste Bauteil 2 und das Photovoltaik-Modul 19 sind mittels eines Befestigungsrahmens 20 gegeneinander verklemmt. Der Befestigungsrahmen 20 umgreift einen äußeren Rand des Photovoltaik-Moduls 19. Zur Befestigung des Wärmeübertragers 1 greifen in den Befestigungsrahmen 20 Klemmleisten 21 ein, welche durch die Klemmfüße 22, die einerseits an den Klemmleisten 21 und anderseits an der Rückseite des ersten Bauteils 2 abgestützt sind.

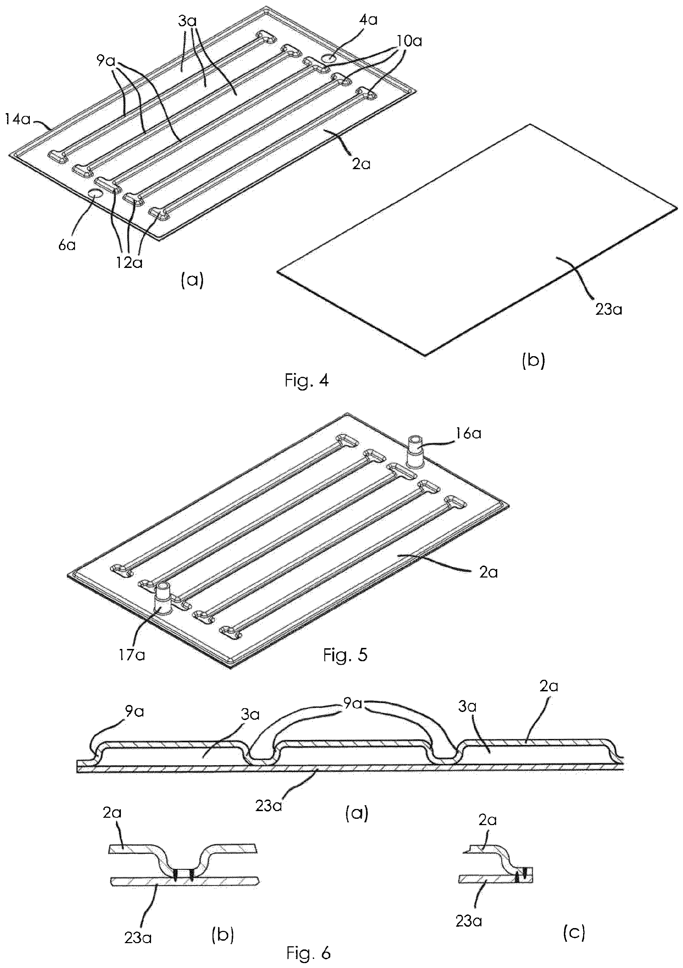

Ein weiteres Ausführungsbeispiel ist in den Fig. 4 bis 6 gezeigt, wobei gleichwirkende Teile mit derselben Bezugszahl wie in den vorangehend genannten Figuren bezeichnet sind und den betreffenden Bezugszahlen der Buchstabe a beigefügt ist.

In Fig. 4a) ist ein erstes Bauteil 2a eines Wärmeübertragers 1a dargestellt, das aus einem, z. B. durch Tiefziehen, verformten Metallblech gebildet ist und eine wannenartige Form aufweist. Das erste Bauteil 2a übernimmt in dem Wärmeübertrager 1a die gleichen Funktionen wie das mit der Außenwandung 14, den Kanalwänden 9 und den Kanalwandaufweitungen 10,12 versehene erste Bauteil 2 in dem Ausführungsbeispiel gemäß Fig. 4 bis 6. In dem ersten Bauteil 2a sind zwei Ausnehmungen gebildet, die einen Wärmeträgerfluideinlass 4a und einen Wärmeträgerfluidauslass 6a bilden.

Eine Rückseite des ersten Bauteils 2a, das in Fig. 5 dargestellt ist, umfasst einen Zulauf- und einen Abflussstutzen 16a,17a.

Kanäle 3a sind in ähnlicher Weise gebildet wie bei dem Ausführungsbeispiel nach den Fig. 1 bis 3. Allerdings sind Kanalwände 9a, Kanalwandaufweitungen 10a,12a und eine Außenwandung 14a durch Auswölbungen gebildet. Der Wärmeübertrager 1a kann eine ebene, in Fig. 4b gezeigte Deckplatte 23a umfassen, die auf das erste Bauteil 2a aufgelegt wird und mit dem das erste Bauteil 2a durch Fügen verbunden wird, beispielsweise durch Schweißen, Löten oder Kleben.

Fig. 6 a), in welcher ein Schnitt durch den Wärmeübertrager 1a gezeigt ist, der aus dem ersten Bauteil 2a und einem zweiten Bauteil 23a, das plattenförmig ist, zusammengesetzt ist, zeigt, wie das erste Bauteil 2a auf dem zweiten Bauteil 23a aufsitzt. Die Außenwandung 14a liegt bündig und dichtend sowie die Kanalwände 9a und Kanalwandaufweitungen 10a,12a liegen bündig und optional dichtend an dem zweiten Bauteil 23 an. Schweißnähte können einseitig oder beidseitig vorgesehen sein, wie das in den Fig. 6 b) und c) gezeigt ist. Alternativ oder ergänzend kann eine Fügung durch z.B. Kleben, Löten und/oder durch die Verwendung lotplattierter Metallbleche hergestellt werden.

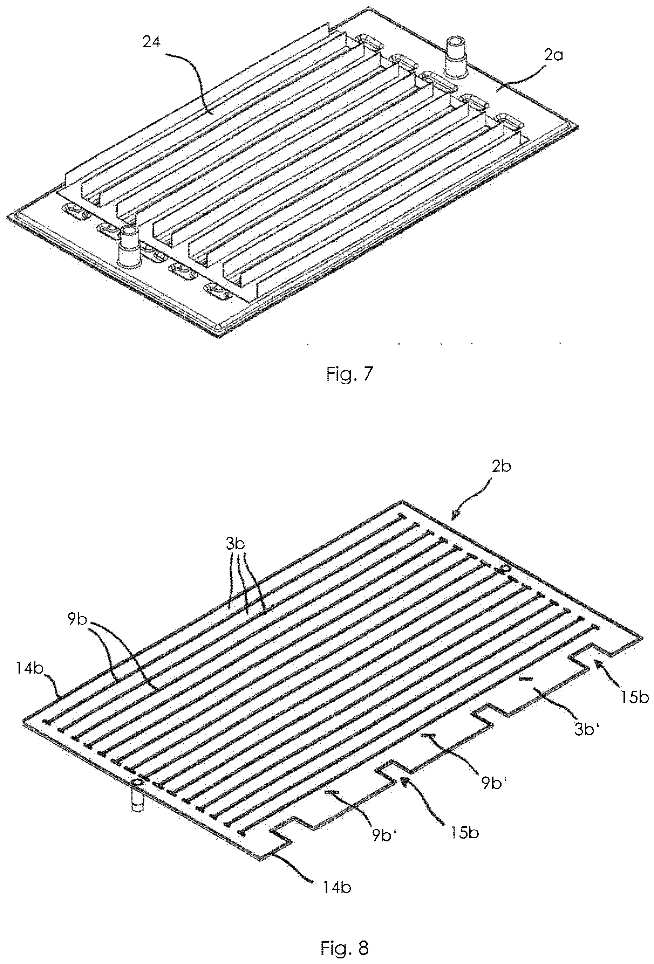

Fig. 7 zeigt ein weiteres Ausführungsbeispiel der Erfindung, bei dem auf dem ersten Bauteil 2a Rippen 24 zur Wärmeaufnahme und/oder -abgabe angeordnet sind, um bei thermischer Stagnation eines mit dem Bauteil 2a versehenen Photovoltaik-Moduls besonders effektiv Wärme von dem Wärmeübertrager abzuführen und/oder Wärme aus der Umgebungsluft aufzunehmen.

In Fig. 8 ist ein erstes Bauteil 2b eines weiteren erfindungsgemäßen Wärmeübertragers 1b dargestellt, dass sich von demjenigen nach Fig. 1 dadurch unterscheidet, dass eine Außenwandung 14b vollständig entlang eines Randes einer Platte, durch die der Wärmeübertrager gebildet ist, angeordnet ist. Insbesondere sind auch die Bereiche der Platte von der Außenwand umgeben, in welcher Aussparungen 15b vorgesehen sind. Zusätzlich zu Kanälen 3b, die durch Kanalwände 9b gebildet sind, ist ein zusätzlicher Kanal 3b'gebildet, der entlang der Aussparungen 15b verläuft. Um auf den Druckverlust Einfluss zu nehmen, der in dem Kanal 3b' auftritt, sind zusätzliche Kanalwände 9b' gebildet.

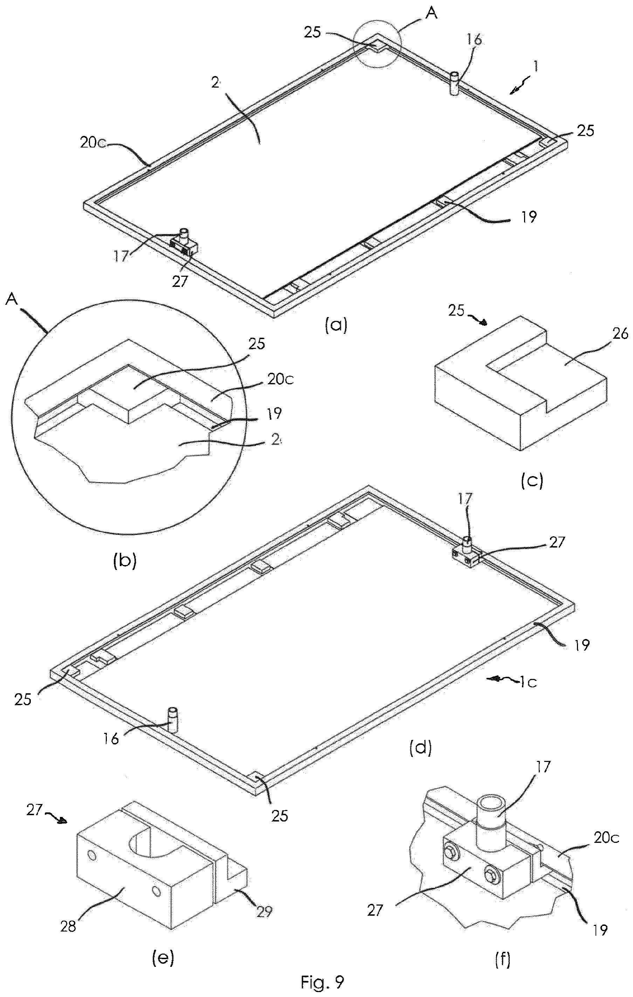

Fig. 9 zeigt eine weitere Einrichtung zur Befestigung eines Wärmeübertragers 1 an einem Photovoltaikmodul 19. Ähnlich dem Beispiel nach Fig. 3 ist ein Befestigungsrahmen 20c vorgesehen, der auf einer Seite das Photovoltaik-Modul 19c an seinem äußeren Rand übergreift. Der Wärmeübertrager 1 wird in zwei zueinander benachbarten Ecken des Befestigungsrahmens 20c mittels zweier Klemmblöcke 25 (einzeln dargestellt in Fig. 9 c)), gegen den Befestigungsrahmen 20c verklemmt (vgl. Fig. 9 b)). Auf einer den genannten Ecken gegenüberliegenden Seite ist eine Klemmschelle 27 angeordnet, mittels derer der Befestigungsrahmen 20c gegen den Stutzen 17 verklemmt wird.

Fig. 9 c) ist zu entnehmen, dass in den Klemmblöcken 25 eine Aussparung 26 vorgesehen ist, in welcher der Wärmeübertrager 1 eingesetzt werden kann. Um den Einsatz des Wärmeübertragers 1 zu vereinfachen, kann die Aussparung nach außen hin abgeschrägt sein.

Die Klemmschelle 27 ist detaillierter in den Figuren 9e) und 9f) dargestellt. Sie umfasst zumindest einen Schellenteil 28, der zum Umgreifen des Stutzen 17 vorgesehen ist, und einen Klemmteil 29, der derart gestuft ist, dass er teilweise in den Schlitz zwischen dem Befestigungsrahmen 20c und dem Photovoltaik-Modul 19 eingreifen kann. Um die Klemmschelle 27 an den Stutzen 17 zu befestigen, sind das Schellenteil 28 und das Klemmteil 29 mit Bohrungen versehen, in welche zu deren Verbindung Schrauben mit Muttern eingesetzt werden.

Zur Befestigung des Wärmeübertragers 1 an dem Befestigungsrahmen 20c und dem Photovoltaikmodul 19, werden zunächst die Klemmblöcke 25 innen in die Ecken des Befestigungsrahmen 20c eingesetzt, danach wird der Wärmeübertrager 1 in den Befestigungsrahmen 20c eingelegt und so weit hin zu der Rahmenseite geschoben, an der die Klemmblöcke 25 angeordnet sind, dass die Klemmblöcke 25 formschlüssig an den Ecken anliegen und der Wärmeübertrager 1 im Bereich der Aussparung 26 zwischen dem Klemmblock 25 und dem Photovoltaikmodul 19 sitzt.

Anschließend wird das Klemmteil 29 so zwischen dem Stutzen 17 und dem Befestigungsrahmen 20c angeordnet, dass es in den Befestigungsrahmen 20c eingreift, das Schellenteil 28 um den Stutzen 17 herum angeordnet und das Schellenteil 28 und das Klemmteil 29 wird mittels der Schrauben und Muttern miteinander verbunden.

Der Wärmeübertrager 1 sitzt nun in dem Befestigungsrahmen 20c und ist stabil an dem Photovoltaikmodul 19 befestigt, insbesondere auch wenn das Photovoltaik-Modul 19 vertikal angeordnet ist.

Wird das Photovoltaik-Modul 19 horizontal angeordnet, kann an zumindest einer der zur Klemmschelle 27 benachbarten unteren Ecke, ggf. ferner an der anderen benachbarten Ecke, je ein zusätzlicher Klemmblock (hier nicht gezeigt) formschlüssig im Befestigungsrahmen 20c angeordnet sein, damit das Eigengewicht des Wärmeübertragers 1 gleichmäßig auf den Befestigungsrahmen 20c verteilt wird. Auch dieser Klemmblock kann aus einem wetterbeständigen und auch unter Temperaturschwankungen maßhaltigen Material, beispielsweise Metall oder Kunststoff, gebildet sein.

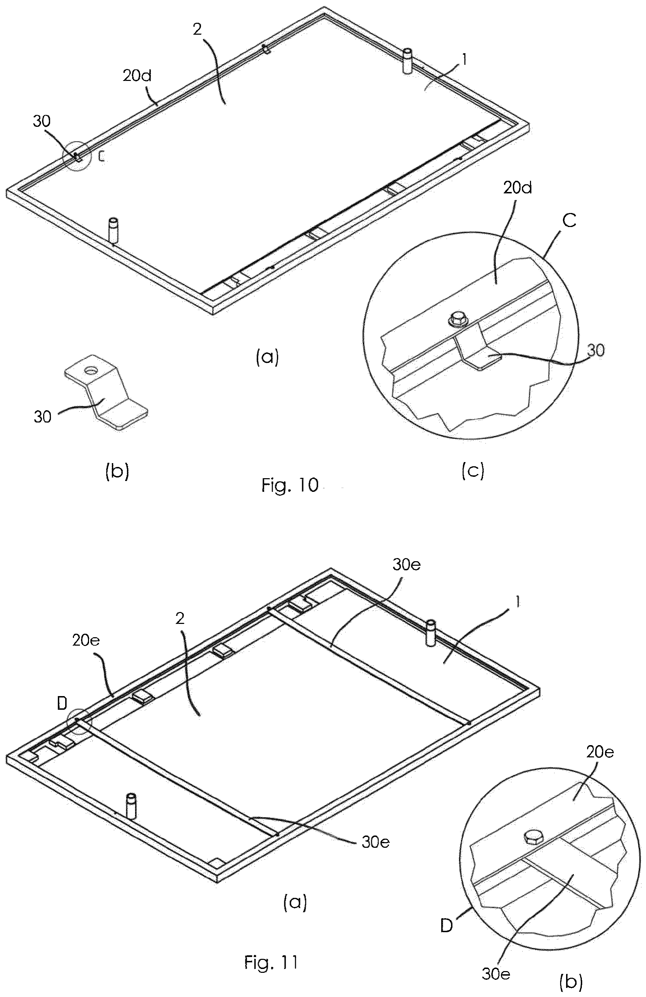

Eine weitere Einrichtung zur Befestigung eines Wärmeübertragers 1 an einem Photovoltaikmodul 19 zeigt Fig. 10. Abweichend von dem Beispiel nach Fig. 9 sind an einem Befestigungsrahmen 20d mindestens vier Federn 30 aus Federstahl befestigt, welche den Wärmeübertrager 1 gegen den Befestigungsrahmen 20d und das Photovoltaikmodul 19 verspannen. Wie insbesondere Fig. 10 c) zu entnehmen ist, sind die Federn 30 an dem Befestigungsrahmen 20d mittels Schrauben befestigt.

Die Federn 30 können an dem Befestigungsrahmen 20d befestigt werden, nachdem der Wärmeübertrager 1 eingelegt worden ist. Alternativ können die Federn 30 vor Einsatz des Wärmeübertragers 1 am Befestigungsrahmen 20d vorinstalliert sein. Sie werden dann vor dem Einsatz unter den oberen Abschnitt des Befestigungsrahmens geschoben und nach dem Einsetzen herausgedreht. Der Wärmeübertrager 1 kann dann ohne Werkzeug an dem Befestigungsrahmen 20d installiert werden.

Zur Stabilisierung des Wärmeübertragers 1 in dem Befestigungsrahmen 20d können die Klemmblöcke 25 nach Fig. 9 in den Befestigungsrahmen 20d eingesetzt werden.

Bei dem Beispiel nach Fig. 11 sind anstatt der Federn 30 aus dem Beispiel nach Fig. 10 längliche Federstahlelemente 30e vorgesehen, die sich über die gesamte Breite eines Befestigungsrahmens 20e erstrecken und jeweilig an zwei gegenüberliegenden Seiten des Befestigungsrahmens 20e befestigt sind. Die Federstahlelemente 30e sind derart vorgeformt, dass sie sich beim Einbau leicht wölben und eine geeignete Klemmkraft erzeugen. Im montierten Zustand spannen sich die Federstahlelemente 30e bogenförmig, so dass sie den Wärmeübertrager 1 in der Mitte des Moduls gegen die Rückseite Photovoltaikmoduls 19 pressen. Sie sind an dem Befestigungsrahmen 20e festgeschraubt und stützen sich an den Innenseiten des Befestigungsrahmens 20e ab, um eine spielfreie und gleichmäßige Kraftverteilung sicherzustellen.

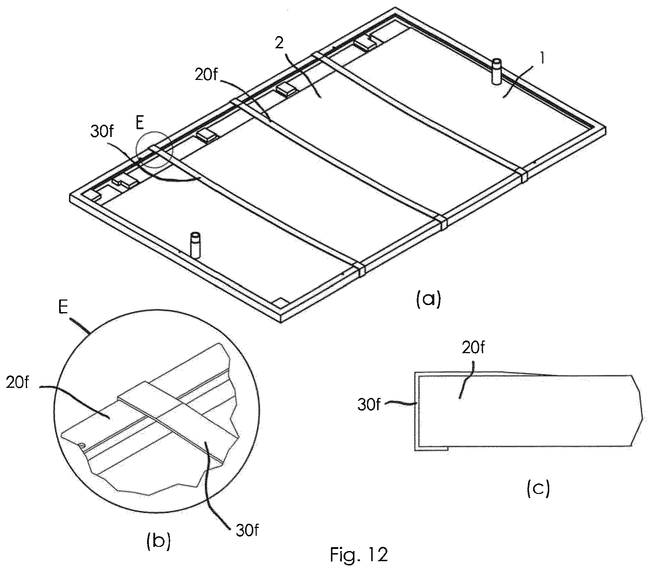

Auch bei dem Beispiel nach Fig. 12 vorgeformte längliche Federstahlelemente 30f vorgesehen. Anders als bei dem Beispiel nach Fig. 11 weisen die Federstahlelemente 30f vorgefertigte, leicht gewölbte Federstahlklammern auf, die direkt außen auf einen Befestigungsrahmen 20f aufgesetzt werden und diesen herumgreifen. Die Klammern sind so gestaltet, dass sie sich wie Clips über den Befestigungsrahmen 20f spannen.

## Patentansprüche

1. Wärmeübertrager für ein Photovoltaik-Modul oder/und einen thermischen, insbesondere photovoltaisch-thermischen, Solarkollektor, der Kanäle (3) zur Aufnahme von Wärmeträgerfluid und einen Einlass (4) und einen Auslass (6) für das Wärmeträgerfluid aufweist, wobei der Wärmeträgerfluideinlass (4) und der Wärmeträgerfluidauslass (6) durch die Kanäle (3) miteinander verbunden sind und die Kanäle (3) in jeweilig unterschiedlichen Abständen von dem Einlass (4) oder/und dem Auslass (6) angeordnet sind,
**dadurch gekennzeichnet,**
**dass** die Kanäle (3) derart ausgebildet sind, dass bei Durchfluss des Wärmeträgerfluids durch die Kanäle (3) unterschiedlich große Druckverluste auftreten.

2. Wärmeübertrager nach Anspruch 1,
**dadurch gekennzeichnet,**
**dass** die Kanäle (3) derart ausgebildet sind, dass die Größe des Druckverlusts vom Abstand des jeweiligen Kanals (3) von dem Wärmeträgerfluideinlass (4) und/oder von dem Wärmeträgerfluidauslass (6) abhängig ist.

3. Wärmeübertrager nach Anspruch 1 oder 2,
**dadurch gekennzeichnet,**
**dass** für jeden der Kanäle (3) ein Kanaleinlass (8) vorgesehen ist und sich die jeweiligen Abstände der Kanaleinlässe (8) von dem Wärmeträgerfluideinlass (4) voneinander unterscheiden und/oder dass für jeden der Kanäle (3) ein Kanalauslass (11) vorgesehen ist und sich die Abstände der jeweiligen Kanalauslässe (11) von dem Wärmeträgerfluidauslass (6) voneinander unterscheiden.

4. Wärmeübertrager nach einem der Ansprüche 1 bis 3,
**dadurch gekennzeichnet,**
**dass** die Kanäle (3) derart ausgebildet sind, dass der Druckverlust, der zwischen dem Wärmeträgerfluideinlass (4) und dem Wärmeträgerfluidauslass (6) auftritt, bei Durchfluss des Wärmeträgerfluids durch jeden der Kanäle (3) gleich groß ist und/oder sich die Druckverluste, die zwischen dem Wärmeträgerfluideinlass (4) und dem Wärmeträgerfluidauslass (6) auftreten, von Kanal (3) zu Kanal (3) um höchstens 10 %, vorzugsweise um höchstens 5 %, voneinander unterscheiden.

5. Wärmeübertrager nach einem der Ansprüche 1 bis 4,
**dadurch gekennzeichnet,**
**dass** die Kanäle (3) derart ausgebildet sind, dass die Größe des Druckverlusts eines der Kanäle (3), der in einem größeren Abstand von dem Wärmeträgerfluideinlass (4) angeordnet ist, kleiner als der Druckverlust eines anderen der Kanäle (3) ist, der in einem geringeren Abstand von dem Wärmeträgerfluideinlass (4) angeordnet ist, und/oder dass die Größe des Druckverlusts eines der Kanäle (3), der in einem größeren Abstand von dem Wärmeträgerfluidauslass (6) angeordnet ist, kleiner als der Druckverlust eines anderen der Kanäle (3) ist, der in einem geringeren Abstand von dem Wärmeträgerfluidauslass (6) angeordnet ist.

6. Wärmeübertrager nach einem der Ansprüche 1 bis 5,
**dadurch gekennzeichnet,**
**dass** sich die Kanäle (3) zur Erzeugung der unterschiedlich großen Druckverluste in der Größe ihrer, insbesondere mittleren, Querschnitte unterscheiden und/oder mit zumindest einem Mittel zur Beeinflussung des Strömungswiderstands des Kanals (3), vorzugsweise einer Blende oder einem Ventil, versehen ist bzw. sind.

7. Wärmeübertrager nach einem der Ansprüche 1 bis 6,
**dadurch gekennzeichnet,**
**dass** für jeden der Kanäle (3) ein Kanaleinlass (8) vorgesehen ist und sich die Größen von Querschnittsflächen der Kanaleinlässe (8) zumindest einzelner der Kanäle (3) voneinander unterscheiden und/oder dass für jeden der Kanäle (3) ein Kanalauslass (11) vorgesehen ist und sich die Größen der Querschnittsflächen der Kanalauslässe (11) zumindest einzelner der Kanäle (3) voneinander unterscheiden.

8. Wärmeübertrager nach einem der Ansprüche 1 bis 7,
**dadurch gekennzeichnet,**
**dass** die Querschnittsfläche eines der Kanaleinlässe (8), der in einem größeren Abstand von dem Wärmeträgerfluideinlass (4) angeordnet ist, größer als die Querschnittsfläche eines anderen der Kanaleinlässe (8) ist, der in einem geringeren Abstand von dem Wärmeträgerfluideinlass (4) angeordnet ist, und/oder die Querschnittsfläche eines der Kanalauslässe (11), der in einem größeren Abstand von dem Wärmeträgerfluidauslass (6) angeordnet ist, größer als die Querschnittsfläche eines anderen der Kanalauslässe (11) ist, der in einem geringeren Abstand von dem Wärmeträgerfluidauslass (6) angeordnet ist.

9. Wärmeübertrager nach einem der Ansprüche 1 bis 8,
**dadurch gekennzeichnet,**
**dass** zur Bildung des jeweiligen Kanalein- und/oder -auslasses (8,11) an zumindest einem der Enden zumindest einer der jeweiligen Kanalwände (9) eine Kanalwandaufweitung (10) gebildet ist, wobei die Kanalwandaufweitung (10) vorzugsweise hammerkopfartig geformt oder/und T-förmig ist.

10. Wärmeübertrager nach einem der Ansprüche 1 bis 9,
**dadurch gekennzeichnet,**
**dass** der Wärmeübertrager (1) zumindest ein Bauteil aufweist, an welchem die Kanalwände (9) und ggf. weitere Teile des Wärmeübertragers angeordnet sind, wobei das eine Bauteil vorzugsweise zumindest abschnittsweise oder vollständig eben ist.

11. Wärmeübertrager nach einem der Ansprüche 1 bis 12,
**dadurch gekennzeichnet,**
**dass** das Bauteil und die Kanalwände (9) einteilig gebildet sind, vorzugsweise durch eine verformte Platte, besonders bevorzugt durch ein tiefgezogenes, vorzugsweise schweiß- und/oder lötbares, Blech.

12. Photovoltaik-Modul oder/und thermischer, insbesondere photovoltaischthermischer, Solarkollektor, **gekennzeichnet durch** einen Wärmeübertrager (1) nach einem der Ansprüche 1 bis 13.

13. Baugruppe zur Nachrüstung eines Photovoltaik-Moduls oder/und eines thermischen, insbesondere photovoltaisch-thermischen, Solarkollektors, **gekennzeichnet durch** einen Wärmeübertrager (1) nach einem der Ansprüche 1 bis 13.

14. Baugruppe zur Nachrüstung eines Photovoltaik-Moduls oder/und eines thermischen, insbesondere photovoltaisch-thermischen, Solarkollektors, **gekennzeichnet durch** eine Einrichtung zur Befestigung eines Wärmeübertragers (1), insbesondere nach einem der Ansprüche 1 bis 13, an dem Photovoltaik-Modul (19) und/oder dem Solarkollektor, welche Mittel zum Halten und/oder Verklemmen des Wärmeübertragers (1) an einem bzw. gegen einen Befestigungsrahmen (20) des Photovoltaik-Moduls (19) und/oder des Solarkollektors umfasst.

15. Baugruppe nach Anspruch 16,
**dadurch gekennzeichnet,**
**dass** das Mittel zum Halten und/oder Verklemmen einen Einsatz (25,27) zur formschlüssigen Verbindung des Wärmeübertragers (1), des Photovoltaik-Moduls (19) und des Befestigungsrahmens (20) umfasst.
